# EUROPEAN PATENT APPLICATION

(11) **EP 2 423 020 A2**
(43) Date of publication of application: **29.02.2012**
(21) Application number: 11158818.2
(22) Date of filing: 18.03.2011
(51) Int. Cl.: B60J 3/02

(54) **A sun visor**

(30) Priority: 23.08.2010 TR 201006997
(71) Applicant: Fompak Ambalaj ve Poliuretan Sanayi ve Ticaret Anonim Sirketi, Bursa (TR); Aycicek, Mehmet, Bursa (TR)
(72) Inventor: Aycicek, Mehmet, Bursa (TR)
(74) Representative: Dericioglu, Ekin

(57) **Abstract**

This invention is about a sun visor (1) in motor vehicles that protects eyes of driver and passengers from sunrays. The movement of mirror garnish of aforementioned sun visor (1) is not seen over the coating layer (120). Thus, coating layer (120) is protected against deformations in time. In addition, user's touch and grip feeling on sun visor (1) is improved.

## Description

### Technical Scope

This invention is about a sun visor in motor vehicles that protects eyes of driver and passengers from sunrays.

### Previous Technique

In motor vehicles, particularly in automobiles, there are sun visors generally for the driver and the passenger next to driver in order to be protected from sunray coming through the window. A sun visor contains a nearly horizontal axle. Due to this axle, sun visors can rotate and turn from non-operating position that does not protect the driver or the passenger from sunray to more than one active positions which partially or wholly prevent the sunray, affecting the driver or the passenger.

Sun visors are covered with a coating material like PVC in order to prevent sunray to damage the sun visor and increase the touch feeling of the user.

Sun visors, besides, contain a mirror and a mirror garnish. Aforesaid garnish generally glides over the mirror and conceals it.

Mirror garnishes of the sun visors in the known case of this technique are beneath the coating film. While the mirror garnish is being opened and closed, it is observed that the garnish moves over the coating and in time, the coating film deforms because of this movement.

In Japan patent specification numbered JP2001121960, sliding garnish mechanisms of mirrors in sun visors are mentioned. It is also adverted that in the mechanism there are a mirror frame, a layer that helps the garnish to glide easily and a buried structure which connects these to the body.

In Japan patent specification numbered JP2004231002, sliding garnish mechanisms of mirrors in sun visors are mentioned. In this mechanism, there is an additional film on the out side of the sliding garnish used in sun visor.

### Brief Description of the Invention

The purpose of this invention is to implement a sun visor on which the movement of the mirror garnish is invisible over coating layer.

Another purpose of this invention is to implement a sun visor which has a coating film that does not deform in time.

Another purpose of this invention is to implement a sun visor which enables an improved user touch feeling.

### Detailed Description of the Invention

A sun visor which has been implemented in order to achieve the goal of the invention is shown in the attached figures, from these figures;

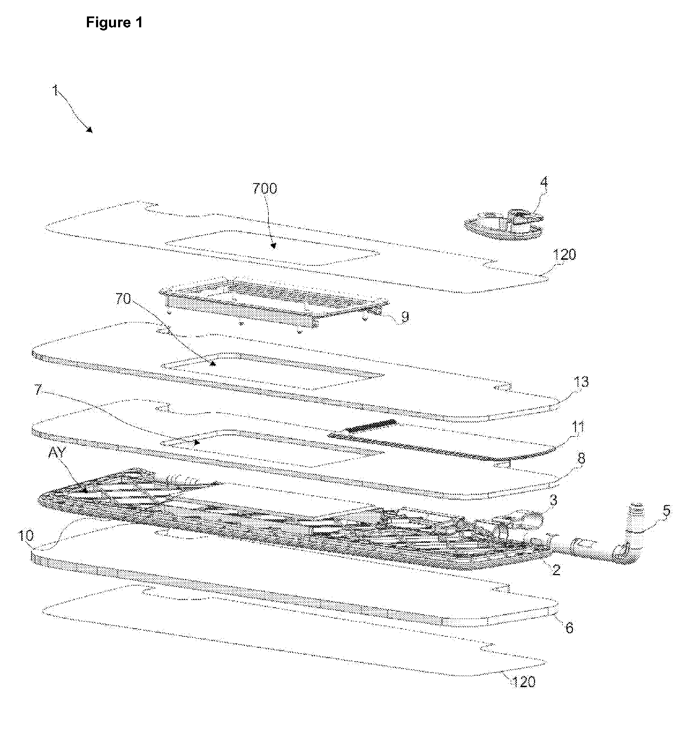

Figure 1 - is a punctured view of the sun visor, subject to the invention.

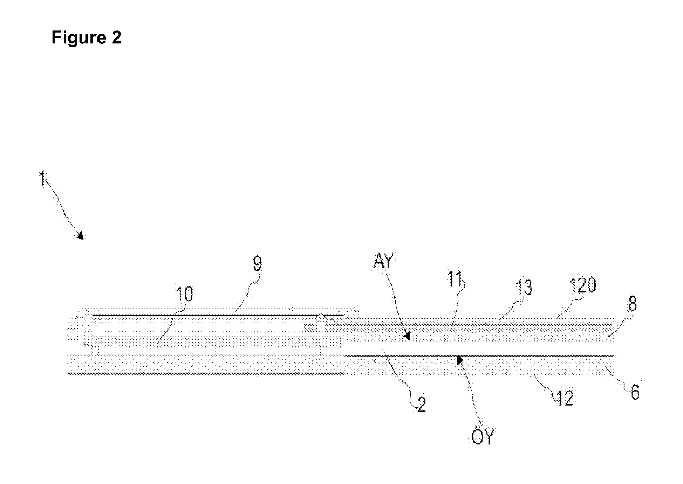

Figure 2 - is a sectional view of the sun visor, subject to the invention.

Components in the figures are enumerated and corresponding names are given below.
1- Sun visor
2- Support element
3- Segment
4- Bracket
5- Stem
6- Front surface sponge layer
7- 70, 700. Gap
8- Back surface sponge layer
9- Frame
10- Mirror
11- Garnish
12-120. Coating
13-Protective sponge layer

ÖY: front face of support element
AY: back face of support element

Hereinafter, passive position refers to the situation in which the sun visor is not being used by the user; in other words, the angle between the car ceiling and the sun visor is nearly zero degree. As to active position refers to the situation in which the sun visor is being used by the user, in other words, every position that is not passive will be stated as active position.

Sun visor subject to invention (1);
contains a support element (2) whose front surface (OY) is turned to inside of the vehicle and back surface (AY) is turned to the car ceiling at passive position and which includes at least one socket on its back surface (AY),
at least one segment (3) on support element (2),
at least one bracket (4) fixated on the car ceiling,
at least one stem (5) whose one edge penetrates to the segment (3) and the other to the bracket (4),
at least one front surface sponge layer (6) which is settled on the front surface (OY) of the support element (2) and prevents the support element (2) to be affected by vibrations and impacts,
at least one back surface sponge layer (8) which is settled on the back surface (AY) of the support element (2), on which there is at least one gap (7) and which prevents the support element (2) to be affected by vibrations and impacts,
at least one frame (9) that settles inside the sockets on support element (2) thereby traversing the gap (7) over back surface sponge layer (8),
at least one mirror (10) which is settled on the frame (9) and enables the user to see him/herself whenever s/he whishes,
at least one garnish (11) which covers the surface of the mirror (10) when it is not used thereby sliding over the frame (9),
at least one coating (12) which is settled on the edge of the front surface sponge layer (6), not connected to support element (2), and which increases touch feeling of the user and prevents the front surface sponge layer (6) from negative effects of sunrays,
at least one protective sponge layer (13) which is settled on the edge of back surface sponge layer (8), not connected to the support element (2) and which the garnish (11) moves between it and the back surface sponge layer (8) while the garnish (11) is uncovering or covering the mirror (10), and which has at least one gap (70) that fits into the gap (7) on the back surface sponge layer (8) in order to make the mirror (10) visible for the user.

In preferred application of the invention, sun visor (1) contains at least one coating (120) which is settled on the surface of the protective surface sponge layer (13), not connected to the back surface sponge layer (8), and which increases touch feeling of the user and prevents the protective sponge layer (13) from negative effects of sunrays. In aforementioned application, there is at least one gap (700) on the coating (120), which fits into gaps (7, 70) on the back surface sponge layer (8) and the protective sponge layer (13) in order to make the mirror (10) visible to the user.

Support element (2) in the sun visor (1), subject to the invention composes a skeleton structure which provides resistance. There is at least one segment (3) on the support element (2), which enables sun visor (1) to be connected preferably to the car ceiling. One edge of the stem (5) interconnects with aforementioned segment (3), the other edge with the bracket (4) on the car ceiling, and thus, sun visor (1) is connected to the car ceiling in a way that it can rotate at an angle previously adjusted. In the preferable application, the sun visor (1) spirals in stem (5) pivot between the ceiling and the windshield.

In order to protect the support element (2), composing the skeleton structure, from vibrations and impacts, front surface sponge layer (6) and back surface sponge layer (7) are inserted to front and back surfaces (OY, AY) of the support element (2). The frame (9), on which the mirror that enables the user to see him/herself whenever s/he wishes due to the gap (7) on the back surface sponge layer (6) is placed, is settled on back surface (AY) of support element (2). There is at least one garnish (11) over the frame (9) which prevents the mirror (10) to be seen from outside at times it is not used. Aforementioned garnish (11) glides over the frame (9). Thus, it covers up or uncovers the mirror (10).

A protective sponge layer (13) is placed on the surface of back surface sponge layer (8), which is not connected with support element (2) in a way that the garnish (11) will remain in between. The garnish (11) moves between back surface sponge layer (8) and protective sponge layer (13). Thus, the movement between two sponge layers (8, 13) is not felt by the user. Protective sponge layer (13) also contains at least one gap (70) in order to make the placement of the frame (9) on the support element (2) and the visibility of the mirror (10) over the frame (9) by the user possible. Aforementioned gap (70) fits into the gap (7) preferably on the back surface sponge layer (8).

There is at least one coating (12, 120) on each surfaces of protective sponge layer (13) which turns to the car ceiling and the front surface sponge layer (6) which turns to inside of the vehicle when the sun visor (1) in passive position. Aforementioned coatings (12, 120) prevent sunrays to damage the sponges (8. 13). Aforementioned coatings (12, 120), besides, increase the touch feeling of the user on the sun visor (1).

In order to enable the user to see the mirror (10); coating (120) on the protective sponge layer (13) contains at least one gap (700) which fits into gaps (7, 70), preferably on the back surface sponge layer (8) and the protective sponge layer (13).

In the preferable application of the invention, coatings (12, 120) which protect the sun visor (1) from negative effects of sun and increases touch feeling of user are manufactured from polyvinyl chloride (PVC) material.

In the preferable application of the invention, raw material of the sponges (6, 8, 13) which used on sun visor (1) is polyethylene.

In the preferable application of the invention, thicknesses of back surface sponge layer (8) and the protective sponge layer (13) are equal.

In the preferable application of the invention, thickness of front surface sponge layer (6) has a bigger value than the values of thicknesses of back surface sponge layer (8) and the protective sponge layer (13).

From these basic concepts, developing a wide range of applications of the sun visor (1), subject to the invention, is possible; and the invention can not be limited with the examples demonstrated here; it is principally as specified in the claims.

## Claims

1. A sun visor (1) that includes a support element (2) whose front surface (OY) is turned to inside of the vehicle and back surface (AY) is turned to the car ceiling at passive position and which includes at least one socket on its back surface (AY),
at least one segment (3) over support element (2),
at least one bracket (4) fixated on the car ceiling,
at least one stem (5) whose one edge penetrates to the segment (3) and the other to the bracket (4),
at least one front surface sponge layer (6) which is settled on the front surface (OY) of the support element (2) and prevents the support element (2) to be affected by vibrations and impacts,
at least one back surface sponge layer (8) which is settled on the back surface (AY) of the support element (2), on which there is at least one gap (7) and which prevents the support element (2) to be affected by vibrations and impacts,
at least one frame (9) that settles inside the sockets on support element (2) thereby traversing the gap (7) over back surface sponge layer (8),
at least one mirror (10) which is settled over the frame (9) and enables the user to see him/herself whenever s/he whishes,
at least one garnish (11) which covers the surface of the mirror (10) when it is not used thereby sliding over the frame (9),
at least one coating (12) which is settled on the edge of the front surface sponge layer (6), not connected to support element (2), and which increases touch feeling of the user and prevents the front surface sponge layer (6) from negative effects of sunrays; and characterized with at least one protective sponge layer (13) which is settled on the edge of back surface sponge layer (8), not connected to the support element (2) and which the garnish (11) moves between it and the back surface sponge layer (8) while the garnish (11) is uncovering or covering the mirror (10), and which has at least one gap (7) that fits into the gap (7) on the back surface sponge layer (8) in order to make the mirror (10) visible for the user.

2. A sun visor (1) as in Claim 1 which is characterized with a protective sponge layer (13), which has at least one coating (120) that is settled on the surface not connected to the back surface sponge layer (8), prevents the negative effects of sunrays and increases the user's touch feeling.

3. A sun visor (1) as in Claim 2 which is characterized with a coating (120) on which there is at least one gap (700) fitting into gaps (7, 70) on back surface sponge layer (8) and protective sponge layer (13) in order to make the mirror (10) visible for the user.

4. A sun visor (1) as in the Claim 2 or 3 which is characterized with coatings (12, 120) manufactured from polyvinyl chloride (PVC).

5. A sun visor (1) as in any of the Claims between 1 and 4 which is characterized with a front surface sponge layer (6) whose raw material is polyethylene.

6. A sun visor (1) as in any of the Claims between 1 and 5 which is characterized with a back surface sponge layer (8) whose raw material is polyethylene.

7. A sun visor (1) as in any of the Claims between 1 and 6 which is characterized with a protective sponge layer (13) whose raw material is polyethylene.

8. A sun visor (1) as in any of the Claims between 1 and 7 which is characterized with a protective sponge layer (13) whose thickness equals to thickness of back surface sponge layer (8).

9. A sun visor (1) as in any of the Claims between 1 and 8 which is characterized with a front surface sponge layer (6) whose thickness is larger than the thickness of the back surface sponge layer (8).

10. A sun visor (1) as in any of the Claims between 1 and 9 which is characterized with a front surface sponge layer (6) whose thickness is larger than the thickness of the protective sponge layer (13).
